# DEMANDE DE BREVET EUROPEEN

(11) **EP 2 353 466 A1**
(43) Date de publication de la demande: **10.08.2011**
(21) Numéro de dépôt: 11153079.6
(22) Date de dépôt: 02.02.2011
(51) Int. Cl.: A47J 27/05

(54) **Organe de jonction bord à bord d'un premier et d'un second plat de cuisson**

(30) Priorité: 04.02.2010 FR 1050787
(71) Demandeur: Meledo, M. Hervé, 44240 Suce sur Erdre (FR)
(72) Inventeur: Meledo, M. Hervé, 44240 Suce sur Erdre (FR)
(74) Mandataire: Delorme, Nicolas

(57) **Abrégé**

L'invention concerne organe de jonction (2) bord à bord d'un premier et d'un second plat (10, 11) de cuisson présentant chacun un bord d'extrémité libre (100, 110), remarquable en ce que l'organe de jonction (2) comporte une première paroi destinée à s'étendre sur le pourtour interne du premier plat (10), une deuxième paroi destinée à s'étendre sur le pourtour externe du second plat (11), et une embase destinée à supporter le bord d'extrémité libre (110) du second plat (11), et reliée aux première et seconde parois (20, 21) de manière à ce que l'organe de jonction (2) s'emboîte entre les bords d'extrémité libres (100, 110) des premier et second plats (10, 11).

## Description

La présente invention se rapporte à un organe de jonction bord à bord d'un premier et d'un second plat de cuisson ainsi qu'à un récipient de cuisson comportant un tel organe de jonction.

Une cuisson à la vapeur nécessite une enceinte de cuisson fermée afin de confiner la vapeur d'eau. Lorsqu'un utilisateur souhaite opérer une cuisson à la vapeur dans un four de cuisson (traditionnelle, par micro-ondes ou par rayonnement infrarouge), celui-ci doit donc utiliser un plat de cuisson équipé d'un couvercle. Or, certains plats de cuisson disponibles dans le commerce ne possèdent pas de couvercle.

La présente invention vise à remédier à l'inconvénient précité et concerne un organe de jonction bord à bord d'un premier et d'un second plat de cuisson présentant chacun un bord d'extrémité libre, caractérisé en ce que l'organe de jonction comporte :
- une première paroi destinée à s'étendre sur le pourtour interne du premier plat, et
- une deuxième paroi destinée à s'étendre sur le pourtour externe du second plat, et
- une embase destinée à supporter le bord d'extrémité libre du second plat, et reliée aux première et seconde parois de manière à ce que l'organe de jonction s'emboîte entre les bords d'extrémité libres des premier et second plats.

Ainsi, un tel organe de jonction permet de superposer stablement les premier et second plats de sorte à obtenir une enceinte de cuisson fermée autorisant une cuisson à la vapeur.

Avantageusement, l'organe de jonction comporte des tétons montés sur l'embase et destinés à venir en appui sur le bord d'extrémité libre du premier plat.

Ainsi, la présence de tétons sur l'embase permet de rehausser le second plat relativement au premier plat, et d'augmenter le volume de l'enceinte de cuisson.

Encore avantageusement, l'organe de jonction comporte au moins une poignée disposée sur la deuxième paroi.

Une telle poignée forme des moyens de préhension permettant de manipuler le second plat par l'intermédiaire de l'organe de jonction.

Avantageusement, l'organe de jonction comporte des tétons montés sur la poignée.

Ainsi, la présence de tétons sur la poignée permet un écoulement de la condensation provenant du plat supérieur. La présence de tétons sur la poignée permet également d'augmenter le volume de l'enceinte de cuisson.

Avantageusement, l'organe de jonction est réalisé dans un matériau isolant thermiquement.

Ainsi, un tel organe de jonction permet d'isoler thermiquement les premier et second plats et de faciliter sa manipulation sans risque de brûlures.

Préférentiellement, le matériau isolant thermiquement est un plastique alimentaire, tel que le polypropylène.

Ainsi l'organe de jonction peut être au contact d'un aliment sans risque de le contaminer.

Selon une réalisation particulière, les première et seconde parois et l'embase sont monobloc.

La présente invention se rapporte également à un récipient de cuisson caractérisé en ce qu'il comporte des premier et second plats de cuisson présentant chacun un bord d'extrémité libre, et un organe de jonction conforme à l'invention configuré de sorte qu'il s'emboîte entre les bords d'extrémité libres des premier et second plats.

Préférentiellement, les plats de cuisson sont réalisés dans un matériau autorisant la propagation d'un rayonnement infrarouge, par exemple le verre.

D'autres caractéristiques et avantages apparaîtront dans la description qui va suivre de deux modes de réalisation d'un récipient de cuisson selon l'invention, donnés à titre d'exemples non limitatifs, en référence aux dessins annexés dans lesquels :
- la figure 1 est une vue en perspective d'un premier récipient de cuisson disposé dans un four de cuisson,
- la figure 2 est une vue partielle de l'intérieur d'un second récipient en perspective à l'échelle agrandie, présentant une coupe de l'organe de jonction,
- la figure 3 est une vue partielle, en perspective à l'échelle agrandie, de l'organe de jonction, côté poignée, illustré à la figure 2 supportant un bord d'extrémité libre d'un plat de cuisson,

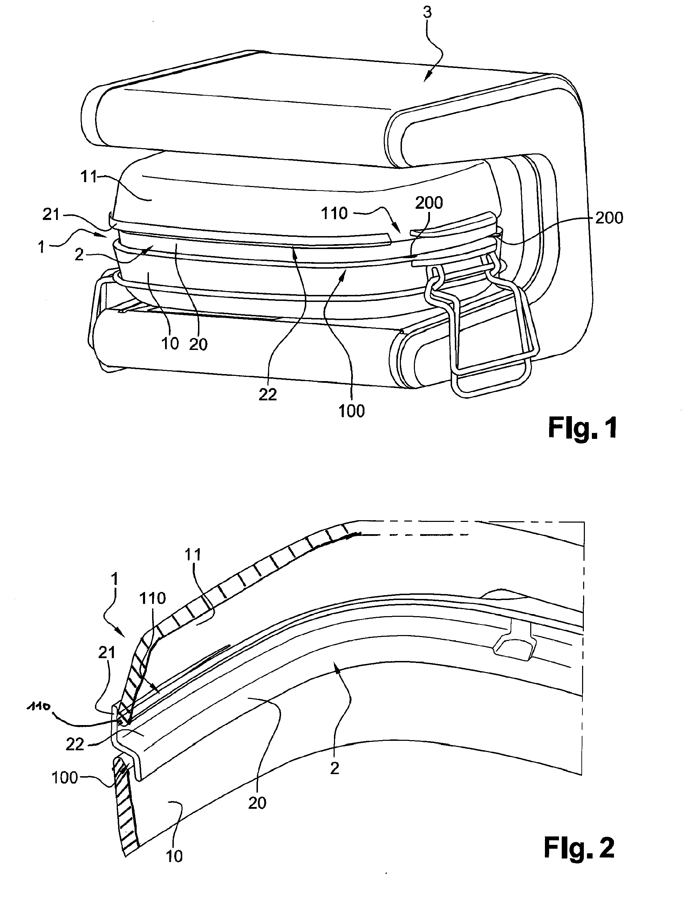

Le premier récipient 1 de cuisson illustré à la figure 1 comporte un premier plat 10 de cuisson inférieur et un second plat 11 de cuisson supérieur présentant chacun un bord d'extrémité libre 100, 110 annulaire. Les premier et second plats 10, 11 présentent une forme sensiblement identique.

Comme illustré à la figure 1, le premier récipient 1 est disposé dans un four 3 de cuisson par rayonnement infrarouge. A cet effet, les premier et second plats 10, 11 sont réalisés dans un matériau autorisant la propagation d'un rayonnement infrarouge, par exemple le verre.

Les premier et second plats 10, 11 sont joints bord à bord par l'intermédiaire d'un organe de jonction 2 annulaire. L'organe de jonction 2 peut être réalisé en acier inoxydable. Les premier et second plats 10, 11 sont ainsi superposés.

L'organe de jonction 2 comporte une première paroi 20 sensiblement verticale s'étendant sur le pourtour interne du premier plat 10. L'organe de jonction 2 comporte une deuxième paroi 21 sensiblement verticale s'étendant sur le pourtour externe du second plat 11. En outre, l'organe de jonction 2 comporte une embase 22 sensiblement horizontale supportant le bord d'extrémité libre 110 du second plat 11. La première paroi 20 de l'organe de jonction 2 est équipée d'oreilles 200 s'étendant horizontalement et venant en appui sur le bord d'extrémité libre 100 du premier plat 10.

L'organe de jonction 2 présente une section transversale sensiblement en forme de marche, de sorte à s'emboîter entre les bords d'extrémité libres 100, 110 des premier et second plats 10, 11. Par « transversale » on entend une direction perpendiculaire à une direction s'étendant suivant la longueur d'un plat.

Il est à noter que les première et seconde parois 20, 21 et l'embase 22 sont monobloc.

Le second récipient représente un second mode de réalisation du premier récipient 1 dans lequel les mêmes éléments sont désignés par les mêmes références que précédemment.

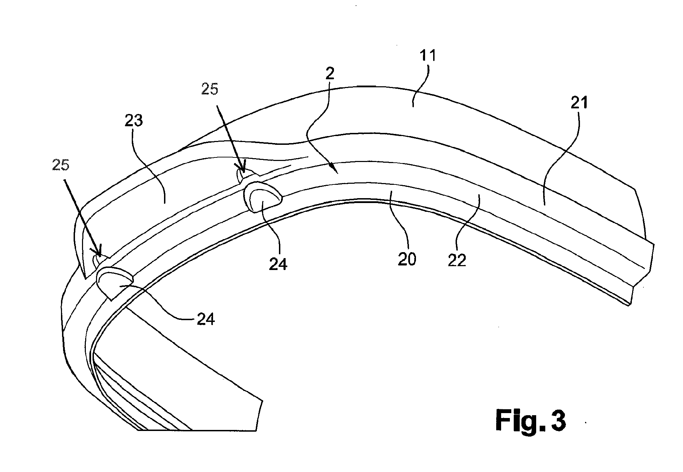

Le second récipient 1 illustré aux figures 2 et 3 diffère du premier récipient 1 en ce que l'organe de jonction 2 comporte une poignée 23 s'étendant sur la deuxième paroi 21.

L'organe de jonction 2 comporte des tétons 25 montés sur la poignée 23 pour permettre un écoulement de la condensation provenant du second plat 11. La poignée 23 est sensiblement inclinée relativement à un axe horizontal en direction de l'enceinte formée par les premier et second plats 10, 11 de manière à faciliter cet écoulement de la condensation.

En outre, l'organe de jonction 2 comporte des tétons 24 s'étendant verticalement, et montés sur l'embase 22 de sorte à venir en appui sur le bord d'extrémité libre 100 du premier plat 10.

L'organe de jonction 2 peut être réalisé en plastique alimentaire, tel que le polypropylène, possédant des propriétés d'isolation thermique. L'organe de jonction 2 peut être réalisé en acier inoxydable.

Lorsqu'un utilisateur souhaite obtenir le second récipient 1, celui-ci doit préalablement monter l'organe de jonction 2 sur le premier plat 10 inférieur de sorte que les tétons 24 sont en appui sur le bord d'extrémité libre 100 du premier plat 10, et que la première paroi 20 s'étend sur le pourtour interne du premier plat 10.

Ensuite, l'utilisateur vient rapporter le second plat 11 sur l'organe de jonction 2 de sorte que l'embase 22 supporte le bord d'extrémité libre 110 du second plat 11, et que la deuxième paroi 21 s'étend sur le pourtour externe du second plat 11.

L'ouverture du second récipient 1 s'effectue en soulevant l'organe de jonction 2 par la poignée 23, et par là-même le second plat 11.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention.

## Revendications

1. Organe de jonction (2) bord à bord d'un premier et d'un second plat (10, 11) de cuisson présentant chacun un bord d'extrémité libre (100, 110), **caractérisé en ce que** l'organe de jonction (2) comporte :
- une première paroi (20) destinée à s'étendre sur le pourtour interne du premier plat (10), et
- une deuxième paroi (21) destinée à s'étendre sur le pourtour externe du second plat (11), et
- une embase (22) destinée à supporter le bord d'extrémité libre (110) du second plat (11), et reliée aux première et seconde parois (20, 21) de manière à ce que l'organe de jonction (2) s'emboîte entre les bords d'extrémité libres (100, 110) des premier et second plats (10, 11).

2. Organe de jonction (2) selon la revendication 1, **caractérisé en ce qu'**il comporte des tétons (24) montés sur l'embase (22) et destinés à venir en appui sur le bord d'extrémité libre (100) du premier plat (10).

3. Organe de jonction (2) selon les revendications 1 ou 2, **caractérisé en ce qu'**il comporte au moins une poignée (23) disposée sur la deuxième paroi (21).

4. Organe de jonction (2) selon la revendication 3, **caractérisé en ce qu'**il comporte des tétons (25) montés sur la poignée (23).

5. Organe de jonction (2) selon l'une des revendications 1 à 4, **caractérisé en ce qu'**il est réalisé dans un matériau isolant thermiquement.

6. Organe de jonction (2) selon la revendication 5, **caractérisé en ce que** le matériau isolant thermiquement est un plastique alimentaire, tel que le polypropylène.

7. Organe de jonction (2) selon l'une des revendications 1 à 6, **caractérisé en ce que** les première et seconde parois (20, 21) et l'embase (22) sont monobloc.

8. Récipient (1) de cuisson **caractérisé en ce qu'**il comporte des premier et second plats (10, 11) de cuisson présentant chacun un bord d'extrémité libre (100, 110), et un organe de jonction (2) selon l'une des revendications 1 à 7 configuré de sorte qu'il s'emboîte entre les bords d'extrémité libres (100, 110) des premier et second plats (10, 11).
